# EUROPEAN PATENT SPECIFICATION

(11) **EP 4 108 532 B1**
(45) Date of publication and mention of the grant of the patent: **31.01.2024**
(21) Application number: 22158596.1
(22) Date of filing: 24.02.2022
(51) Int. Cl.: B60W 10/06, B60W 10/08, B60W 30/165, B60W 30/16

(54) **DRIVING CONTROL APPARATUS FOR HYBRID VEHICLE**
ANTRIEBSREGELUNGSGERÄT FÜR EIN HYBRIDFAHRZEUG
APPAREIL DE COMMANDE D'ENTRAÎNEMENT POUR VÉHICULE HYBRIDE

(30) Priority: 21.06.2021 JP 2021102562
(43) Date of publication of application: 28.12.2022
(73) Proprietor: Suzuki Motor Corporation, Hamamatsu-shi, Shizuoka 432-8611 (JP)
(72) Inventor: Ebata, Tatsuro, Hamamatsu-shi, 432-8611 (JP); Oyama, Ryohei, Hamamatsu-shi, 432-8611 (JP)
(74) Representative: Henkel & Partner mbB

(56) References cited:
- EP-A1- 2 586 644
- EP-A2- 0 874 149
- DE-A1-102011 003 486
- GB-A- 2 508 669

## Description

### [Technical Field]

The present invention relates to a driving control apparatus for a hybrid vehicle, and more particularly, relates to a driving control apparatus for a hybrid vehicle having an ACC function.

### [Background Art]

A hybrid vehicle including an engine and a motor in a drive system is required to be controlled so that driving performance and fuel efficiency which are appropriate to a situation are obtained by switching an engine driving mode in which the vehicle drives with only the driving force of the engine, an EV driving mode in which the vehicle drives with only the driving force of the motor, and an HEV driving mode in which the vehicle drives with the driving force of the engine and the driving force of the motor.

For example, JP 4 581 988 B2 discloses that the distribution ratio of the driving force of a motor to required driving force is increased as the inter-vehicle distance from a vehicle ahead is shorter in order to increase the acceleration responsiveness and enhance the ability to follow the vehicle ahead by utilizing the control responsiveness of the motor in a hybrid vehicle having an inter-vehicle distance control function.

GB 2 508 669 A discloses a speed control system for a hybrid electric vehicle which comprises an engine and at least one electric machine. The system is operable to allow a driver to set a target vehicle speed, the system being operable in first and second speed control modes to control the vehicle to maintain the target vehicle speed. In the first speed control mode the system is configured to limit operation of the vehicle to an electric vehicle (EV) mode. In the second speed control mode the system is configured not to limit operation of the vehicle to the EV mode. When the control system is in the first mode and one of a prescribed one or more conditions is met, the system is operable to not limit operation of the vehicle to the EV mode.

### [Summary of Invention]

### [Problem to be Solved by the Invention]

Here, not only in a full hybrid vehicle, but also in a mild hybrid vehicle using the power of a motor supplementally, it is advantageous to shift to the EV driving mode in a low speed range to enhance fuel efficiency. In other words, the vehicle shifts to the EV driving mode in a decelerated state to perform regenerative braking. Even when the vehicle stops after the deceleration, the EV driving mode is still maintained. At the time of starting, the vehicle starts in the EV driving mode, but the vehicle shifts to the HEV driving mode by stepping on the accelerator.

However, in a vehicle as described above and a full hybrid vehicle having a small motor output, when the vehicle starts by means of an ACC (adaptive cruise control) function while following a vehicle ahead, the torque is insufficient with the motor alone, and a sufficient acceleration rate is not obtained immediately after starting, causing a problem in the ability to follow the vehicle ahead.

The present invention has been made in view of the above circumstances, and has an object to provide a driving control apparatus for a hybrid vehicle that achieves both enhancement in fuel efficiency and the ability to follow a vehicle ahead in an ACC function.

### [Means for Solving the Problem]

In order to solve the above problem, according to the present invention, there is provided a driving control apparatus with the features of claim 1 for a hybrid vehicle with an engine and a motor in a drive system, and with a control system for controlling braking/driving force of the engine and the motor, and adapted to selectively perform:
an engine driving mode in which the hybrid vehicle drives with only driving force of the engine;
an EV driving mode in which the hybrid vehicle drives with only driving force of the motor; and
an HEV driving mode in which the hybrid vehicle drives with the driving force of the engine and the driving force of the motor,
the driving control apparatus having an ACC function that performs a constant speed cruise in accordance with a target vehicle speed when another vehicle ahead is not present in the vehicle's cruising lane and performs a following cruise with keeping a predetermined inter-vehicle time when the vehicle ahead is present;
wherein the driving control apparatus is configured,
in a case in which a vehicle ahead being followed by the ACC function accelerates,
to execute acceleration control according to a first torque demand determined by an acceleration rate of the vehicle ahead in the engine driving mode or the HEV driving mode, and
to execute acceleration control according to a second torque demand determined by the acceleration rate of the vehicle ahead in the EV driving mode, and
the second torque demand increases with a greater inclination than the first torque demand.

### [Advantageous Effect of Invention]

As described above, when the vehicle ahead being followed by the ACC function accelerates, in the EV driving mode, the driving control apparatus for a hybrid vehicle according to the present invention executes the acceleration control according to a torque demand which increases with a greater inclination than that in the engine driving mode and the HEV driving mode, so that the timing of switching from the EV driving mode to the HEV driving mode is advanced, which is advantageous in enhancing the ability to follow the vehicle ahead from the EV driving mode.

### [Brief Description of Drawings]

[Figure 1] Figure 1 is a block diagram showing a control system of a hybrid vehicle.
[Figure 2] Figure 2 is a flowchart showing driving control according to a first embodiment of the present invention.
[Figure 3] Figure 3 is a flowchart showing driving control according to a second embodiment of the present invention.
[Figure 4] Figure 4 is a flowchart showing driving control according to a third embodiment of the present invention.
[Figure 5] Figures 5A and 5B are time charts showing a torque and an acceleration rate in the driving control according to the embodiments of the present invention.

### [Mode for Carrying Out the Invention]

Hereinafter, embodiments of the present invention will be described in detail with reference to the drawings.

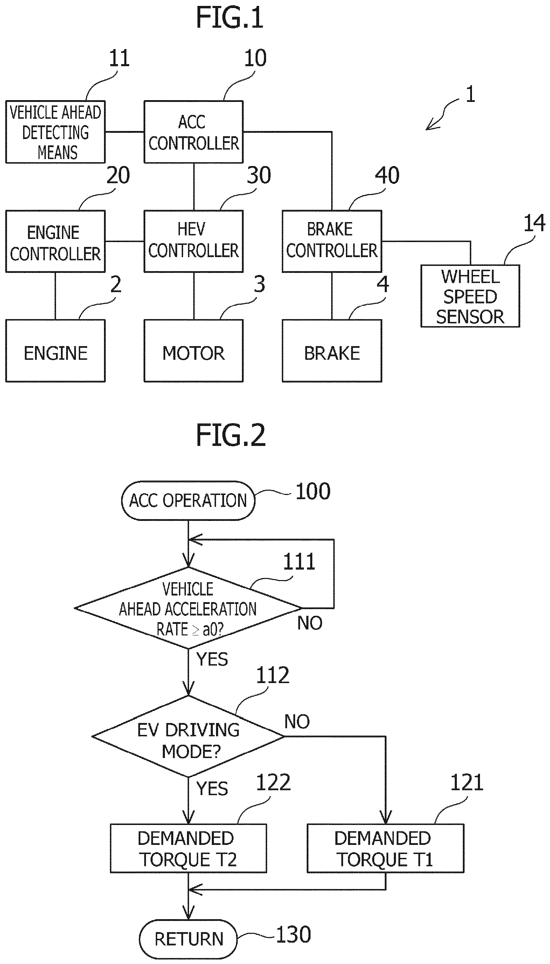

In Figure 1, a vehicle 1 is a hybrid vehicle including an internal combustion engine 2 and a motor 3 in a drive system, and includes an engine controller 20 for controlling the engine 2, and an HEV controller 30 for controlling the motor 3 in cooperation with the engine controller 20.

The vehicle 1 is a mild hybrid vehicle including, as the motor 3, an ISG (Integrated Starter Generator) that is directly connected to a crank shaft of the engine 2 or can transmit driving force via a belt, and in addition to restart of the engine 2 and regenerative power generation by the motor 3, can drive in an engine driving mode in which the vehicle drives with only the driving force of the engine 2, an HEV driving mode in which the vehicle is driven by the driving force of the engine 2 and the driving force of the motor 3, and an EV driving mode in which the vehicle drives with only the driving force of the motor 3 while performing cylinder deactivation on the engine 2.

The vehicle 1 includes a brake system that includes a brake controller 40 for controlling the braking force of a brake 4 of each wheel via a brake actuator, and a wheel speed sensor 14 that can individually detect the speed of each wheel, constituting an ABS/vehicle behavior stabilizing device.

Furthermore, the vehicle 1 includes an ACC controller 10 for collectively controlling the engine controller 20, the HEV controller 30, and the brake controller 40, and also includes vehicle ahead detecting means 11 that constitutes an ACC system together with the ACC controller 10.

The vehicle ahead detecting means 11 can utilize one or a plurality of detection means which have a function of detecting the presence of a vehicle ahead or an object (obstacle, structure) in front of the vehicle 1 and also can measure the relative distance between the vehicle ahead or obstacle and the vehicle 1, such as a millimeter wave radar, a stereo camera, or a LIDAR. The measurement of the relative distance is dynamically executed at a predetermined time rate, and the relative speed of the vehicle ahead with respect to the vehicle 1 is determined as the relative distance change per unit time, and the acceleration rate/deceleration rate of the vehicle ahead is determined.

Each of the engine controller 20, the HEV controller 30, the brake controller 40, and the ACC controller 10 is configured with a microcomputer (MCU) including ROM for storing control programs, setting data, and the like, RAM for temporarily storing arithmetic processing results, CPU for performing arithmetic processing, communication I/F, etc., or an electronic control unit (ECU), and is connected to a sensor group including the vehicle ahead detecting means 11 and the wheel speed sensor 14 via an in-vehicle network (CAN or the like) so as to be capable of mutually communicating with each other.

The ACC controller 10 can issue an acceleration/deceleration command to the engine controller 20, the HEV controller 30, and the brake controller 40 based on detection information from the vehicle ahead detecting means 11 and a vehicle speed calculated from a detection value from the wheel speed sensor 14 in place of a driver's accelerating/braking operation to perform adaptive cruise control (constant speed driving/following driving control/deceleration stop and restart control) adaptable to all vehicle speed ranges.

In other words, during the operation of the ACC function, based on the acceleration/deceleration command from the ACC controller 10, the vehicle 1 drives at a constant speed according to a target vehicle speed when no vehicle ahead is present in the travel lane of the vehicle 1, the vehicle 1 drives according to a target inter-vehicle time while following a vehicle ahead when the vehicle ahead is present in the travel lane of the vehicle 1, the vehicle 1 decelerates and stops while maintaining a set inter-vehicle distance when the vehicle ahead decelerates and stops, and the vehicle 1 restarts when the vehicle ahead starts.

Even during the operation of the ACC function, the vehicle 1 drives in the EV driving mode as much as possible in order to enhance fuel efficiency, and when the torque of the motor 3 is insufficient for the acceleration command from the ACC controller 10, the vehicle 1 switches to the HEV driving mode.

For example, when an acceleration command (torque demand) is issued from the ACC controller 10 due to the acceleration of the vehicle ahead during following and driving in the EV driving mode, the HEV controller 30 operates the motor 3 according to the demanded torque to accelerate the vehicle 1. When a torque demand value from the ACC controller 10 exceeds a threshold value, the HEV controller 30 switches from the EV driving mode to the HEV driving mode, starts the engine 2 by the engine controller 20, and accelerates the vehicle 1 by the driving force of the engine 2.

Furthermore, when a deceleration command (brake demand) is issued from the ACC controller 10 due to deceleration of the vehicle ahead or the like during driving in the HEV driving mode, the HEV controller 30 switches the motor 3 to a regeneration mode to perform regenerative braking. For a brake demand which exceeds regenerative braking, the brake controller 40 generates the braking force of the brake 4 by the brake actuator to decelerate the vehicle 1.

Furthermore, the HEV controller 30 switches from the HEV driving mode to the EV driving mode in the decelerated state, and the engine controller 20 stops the operation of the engine 2. Thereafter, when the vehicle stops from the decelerated state due to the stop of the vehicle ahead, the engine 2 is maintained in the stopped state, and the EV driving mode is maintained even during the stop of the vehicle.

When the vehicle ahead starts from such a stopped state, an acceleration command is issued from the ACC controller 10, and the HEV controller 30 starts the vehicle 1 by the driving force of the motor 3. In such a situation, the vehicle shifts to the HEV driving mode by stepping on the accelerator in normal driving, and the engine 2 is thus started. However, during the operation of the ACC function, the HEV controller 30 switches from the EV diving mode to the HEV driving mode and starts the engine at the time point when an actual torque (current value) by the driving of the motor 3 exceeds a threshold value. Therefore, the mild hybrid vehicles using the driving force of the motor 3 supplementally have had a problem in that acceleration immediately after restarting is delayed with only the driving force of the motor 3.

Therefore, when a vehicle ahead followed by the ACC function accelerates, the ACC controller 10 according to the present invention (i) executes acceleration control according to a first torque demand T1 if the vehicle 1 is in the engine driving mode or the HEV driving mode, and (ii) executes acceleration control according to a second torque demand T2 if the vehicle 1 is in the EV driving mode.

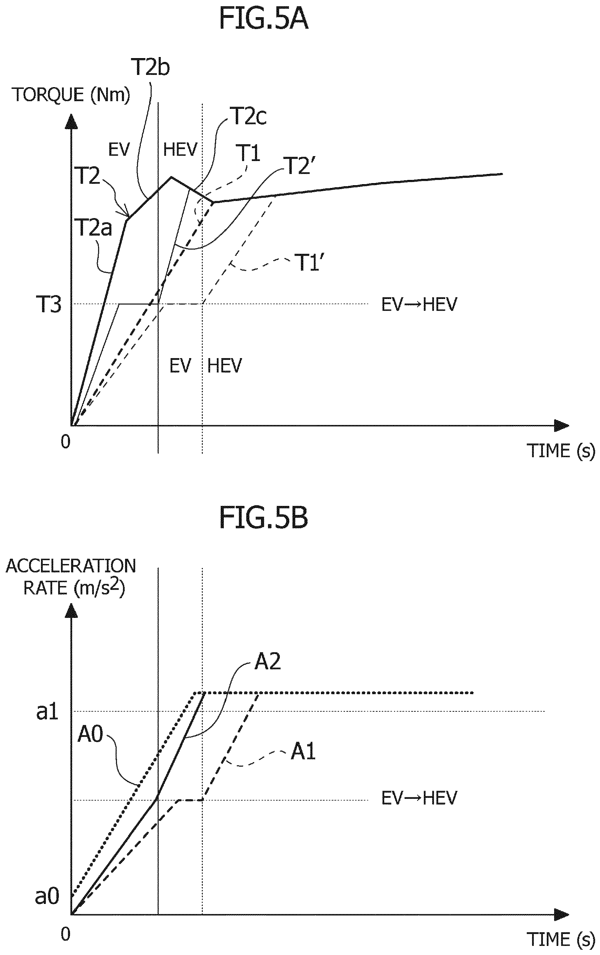

Both of the first and second torque demands T1 and T2 are given by a torque map which is dynamically determined according to the acceleration rate (relative speed) of the vehicle ahead. As shown in Figure 5A, the torque map is set so that
(i) an upper limit value is set to the inclination amount of the first torque demand T1 in order to suppress sudden torque variation, but
(ii) the second torque demand T2 includes a first section T2a which increases with a greater inclination than the first torque demand T1, and a second section T2b which increases with a smaller inclination than the first torque demand T1 and shifts toward the same torque demand value as the first torque demand T1.

As shown in Figure 5A, it is more preferable that the second section T2b include a section T2c which shifts to the same torque demand value as the first torque demand T1 with a negative inclination.

By executing the acceleration control according to the second torque demand T2 as described above, the switching timing from the EV driving mode to the HEV driving mode is advanced in the control of the HEV controller 30 described above, and the vehicle thus shifts early to driving in which the driving force of the engine 2 is mainly used, so that the ability to follow the vehicle ahead is enhanced.

In particular, a torque demand greater than a default torque demand value (the same as the first torque demand T1) is issued upon start of the control to temporarily increase an actual torque above the default torque demand value, and then shift the actual torque to the default value, whereby the ability to follow the vehicle ahead is further enhanced, but it is possible to prevent occurrence of sudden acceleration that may make the driver feel uncomfortable.

### First Embodiment

Figure 2 is a flowchart corresponding to the control in the first embodiment of the present invention. In Figure 2, during the operation of the ACC function (step 100), the acceleration rate of a vehicle ahead followed by the ACC function, that is, the increase rate of the inter-vehicle time is constantly monitored (step 111), and when it is detected that the acceleration rate of the vehicle ahead (the increase rate of the inter-vehicle time) is equal to or greater than a threshold value a0,
(i) if the vehicle 1 is in a driving mode other than the EV driving mode (step 112, NO), acceleration control is executed according to the first torque demand T1 (step 121), and
(ii) if the vehicle 1 is in the EV driving mode (step 112, YES), acceleration control is executed according to the second torque demand T2 (step 122).

After any of the above steps is executed, if an end condition for each step is satisfied, one flow ends (step 130), but this flow is constantly executed during the operation of the ACC function.

Note that the threshold value a0 may be simply set to a positive value (a0>0), but it is preferable that the threshold value a0 be set to a significant value from the viewpoint of control stability. Furthermore, the threshold value a0 may be dynamically set according to the vehicle speed. It is preferable that the threshold value a0 be set to a value which excludes a case in which the acceleration rate of the vehicle ahead is small when the vehicle speed is zero, that is, when the vehicle restarts.

### Second Embodiment

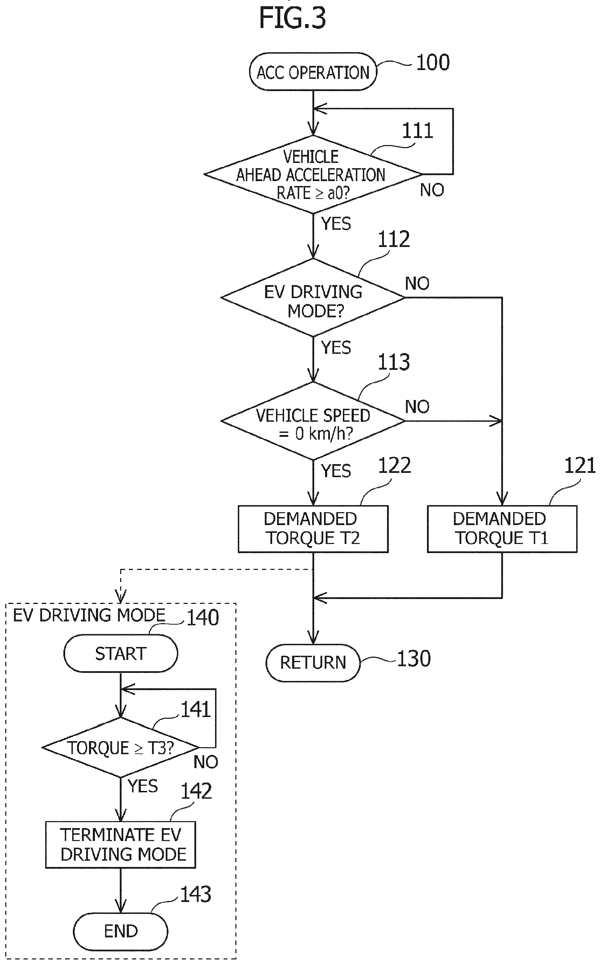

Figure 3 is a flowchart corresponding to the control in the second embodiment of the present invention, and shows an aspect in which different control is performed between a case in which upon following the vehicle ahead, the vehicle restarts from a decelerated and stopped state, and a case in which upon following the vehicle ahead, the vehicle re-accelerates during driving. In Figure 3, during the operation of the ACC function (step 100), the acceleration rate of the vehicle ahead which is followed by the ACC function, that is, the increase rate of the inter-vehicle time, is constantly monitored (step 111), and when it is detected that the acceleration rate of the vehicle ahead (the increase rate of the inter-vehicle time) is equal to or greater than the threshold value a0,
(i) if the vehicle 1 is in a driving mode other than the EV driving mode (step 112, NO), or if the vehicle speed of the vehicle 1 is > 0 km/h, that is, the vehicle is driving (step 113, NO), acceleration control is executed according to the first torque demand T1 (step 121), and
(ii) if the vehicle 1 is in the EV driving mode (step 112, YES) and the vehicle speed of the vehicle 1 is equal to 0 km/h, that is, the vehicle 1 is stopped at a time when the acceleration rate of the vehicle ahead is detected (step 113, YES), acceleration control is executed according to the second torque demand T2 (step 122).

In step 122, when the actual torque has reached a predetermined threshold value T3 (step 141) after starting from the stopped state in the EV driving mode (step 140), the HEV controller 30 switches to the HEV driving mode (step 142), and the engine controller 20 starts the engine 2, so that the EV driving mode terminates (step 143).

After any of the above steps 121 and 122 is executed, one flow ends if the end condition for each step is satisfied (step 130), but this flow is constantly executed during the operation of the ACC function.

Note that the above threshold value (0 km/h) for determining the stopped state of the vehicle 1 can be set to a value (for example, 1 to 3 km/h) that enables the vehicle to be regarded as being substantially in the stopped state.

In the acceleration control according to the second embodiment, in a case in which an acceleration command is issued from the ACC controller 10 upon start of the vehicle ahead when the vehicle stops in the EV driving mode, and thus, the vehicle follows the vehicle ahead to restart, the acceleration control is executed according to the second torque demand T2. Therefore, as indicated by reference sign T2' in Figure 5A, the switching timing from the EV driving mode to the HEV driving mode is advanced, the vehicle early shifts to acceleration according to the driving force of the engine 2, and the rise of the actual torque T2' is faster, so that the rise of the acceleration rate is also faster as indicated by reference sign A2 in Figure 5B, and the ability to follow the vehicle ahead is enhanced.

On the other hand, when an acceleration command is issued from the ACC controller 10 upon re-acceleration of the vehicle ahead or the like during the driving in the EV driving mode and the vehicle re-accelerates, the vehicle can follow the vehicle ahead with a lower torque as compared with the case in which the vehicle restarts from the stopped state, so that the control prioritizing fuel efficiency and ride comfort can be executed by switching from the EV driving mode to the HEV driving mode at normal timing without executing the processing of suddenly increasing the torque demand value.

### Third Embodiment

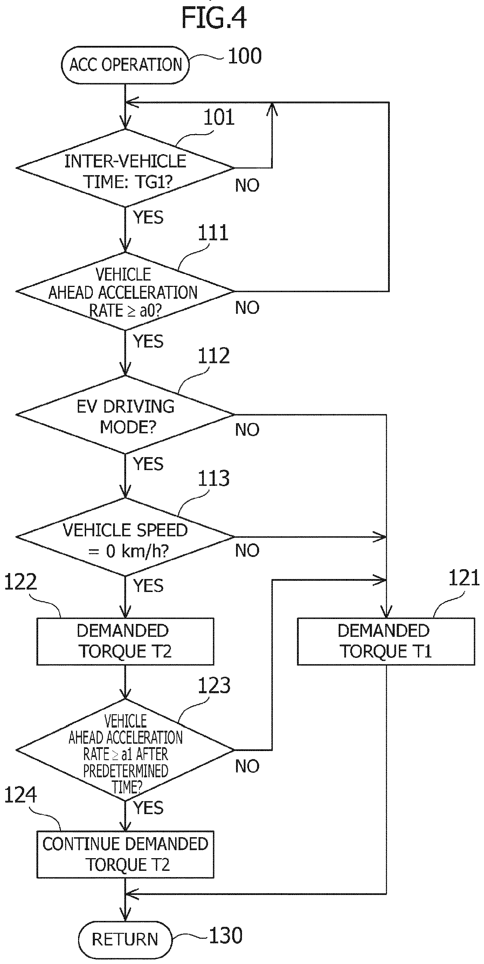

Figure 4 shows a flowchart corresponding to the control in the third embodiment of the present invention. The third embodiment is identical to the second embodiment in that different control is executed between the case in which the vehicle follows the vehicle ahead to restart from the decelerated and stopped state and the case in which the vehicle follows the vehicle ahead to re-accelerate during the driving, but different from the second embodiment in that the acceleration control is executed in consideration of the target in-vehicle time TG in the ACC function.

In a case in which a target inter-vehicle time (TG = inter-vehicle distance/vehicle speed) when the vehicle drives while following the vehicle ahead can be selectively set from a plurality of stages, for example, three stages of short (TG1), middle (TG2) and long (TG3) by a driver's switching operation, the ACC controller 10 is set to execute the control of step S111 and subsequent steps thereto when the target in-vehicle time TG is set to "short (TG1)" on a short side in the set range during the operation of the ACC function (step 100) (step S101, YES) as shown in Figure 4.

In other words, when it is detected that the acceleration rate of the vehicle ahead (the increase rate of the inter-vehicle time) is equal to or greater than the threshold value a0 (step 111, YES),
(i) if the vehicle 1 is in a driving mode other than the EV driving mode (step 112, NO) or if the vehicle speed of the vehicle 1 is > 0 km/h, that is, the vehicle is driving (step 113, NO), the acceleration control is executed according to the first torque demand T1 (step 121), and
(ii) if the vehicle 1 is in the EV driving mode (step 112, YES) and the vehicle speed of the vehicle 1 is 0 km/h, that is, the vehicle stops, at the time when the acceleration rate of the vehicle ahead is detected (step 113, YES), the acceleration control is executed according to the second torque demand T2 (step 122).

When the acceleration rate A0 (the increase rate of the inter-vehicle time) of the vehicle ahead is equal to or greater than a predetermined threshold value a1 after a predetermined time (for example, 2 to 3 seconds) has elapsed from issuance of the second torque demand T2 (step 123, YES), the acceleration control according to the second torque demand T2 is continued (step 124). However, when the acceleration rate A0 of the vehicle ahead has not reached the predetermined threshold value a1 even after the predetermined time has elapsed (step 123, NO), the acceleration control is switched to the acceleration control according to the first torque demand T1.

Thereafter, one flow ends when the end condition for each acceleration control (T1, T2) is satisfied (step 130), and like the previous embodiments, this flow is constantly executed during the operation of the ACC function.

In the acceleration control according to the third embodiment, when the short target inter-vehicle time TG1 is set in the set range of the target inter-vehicle time (target inter-vehicle distance), it can be considered that the driver intends to focus on the ability to follow. Therefore, in such a case, the control of advancing the switching timing from the EV driving mode to the HEV driving mode and early shifting to acceleration according to the driving force of the engine 2 is performed to enhance acceleration performance and the ability to follow the vehicle ahead, whereby it is possible to implement driving that matches the driver's taste.

When the acceleration rate A0 of the vehicle ahead (the increase rate of the inter-vehicle time) does not reach the predetermined threshold value a1 even after the lapse of the predetermined time, the acceleration control is switched to the acceleration control according to the first torque demand T1, whereby it is possible to suppress excessive approach or unnecessary braking in a situation in which the shorter target inter-vehicle time TG1 is set.

In the above-described embodiments, the vehicle 1 is a mild hybrid vehicle, but the control apparatus according to the present invention can be implemented in a full hybrid vehicle in which the maximum output can be obtained in the HEV driving mode in which the vehicle drives by the driving force of the engine 2 and the motor 3.

### Reference Signs List

- 1: Vehicle
- 2: Engine
- 3: Motor
- 4: Brake
- 10: ACC controller
- 11: Vehicle ahead detecting means
- 14: Wheel speed sensor
- 20: Engine controller
- 30: HEV controller
- 40: Brake controller

## Claims

1. A driving control apparatus (10) for a hybrid vehicle (1) with an engine (2) and a motor (3) in a drive system, and with a control system for controlling braking/driving force of the engine (2) and the motor (3), and adapted to selectively perform:
an engine driving mode in which the hybrid vehicle (1) drives with only driving force of the engine (2);
an EV driving mode in which the hybrid vehicle (1) drives with only driving force of the motor (3); and
an HEV driving mode in which the hybrid vehicle (1) drives with the driving force of the engine (2) and the driving force of the motor (3),
the driving control apparatus having an ACC function that performs a constant speed cruise in accordance with a target vehicle speed when another vehicle ahead is not present in the vehicle's cruising lane and performs a following cruise with keeping a predetermined inter-vehicle time when the vehicle ahead is present;
wherein the driving control apparatus (10) is configured,
in a case in which the vehicle ahead being followed by the ACC function accelerates,
to execute acceleration control according to a first torque demand (T1) determined by an acceleration rate of the vehicle ahead in the engine driving mode or the HEV driving mode, and
to execute acceleration control according to a second torque demand (T2) determined by the acceleration rate of the vehicle ahead in the EV driving mode, and
the second torque demand (T2) increases with a greater inclination than the first torque demand (T1).

2. The driving control apparatus (10) for the hybrid vehicle (1) according to claim 1, wherein the control system is adapted to execute control for shifting to the EV driving mode when an actual torque becomes less than a predetermined threshold value (a0), and shifting to the HEV driving mode when the actual torque becomes equal to or greater than the predetermined threshold value (a0) during driving in the EV driving mode.

3. The driving control apparatus (10) for the hybrid vehicle (1) according to claim 1, wherein the acceleration control according to the second torque demand (T2) is executed in a case in which the vehicle ahead being followed by the ACC function starts while the vehicle (1) is stopping in the EV driving mode due to stop of the vehicle ahead.

4. The driving control apparatus (10) for the hybrid vehicle (1) according to any one of claims 1 to 3, wherein the acceleration control in the EV driving mode according to the second torque demand (T2) is executed when the target inter-vehicle time in the ACC function is equal to or less than a predetermined value in a set range thereof.

## Patentansprüche

1. Eine Antriebssteuervorrichtung (10) für ein Hybridfahrzeug (1) mit einer Maschine (2) und einem Motor (3) in einem Antriebssystem, und mit einem Steuersystem zum Steuern einer Brems-/Antriebskraft der Maschine (2) und des Motors (3), und angepasst, um selektiv durchzuführen:
einen Maschinenantriebsmodus, in dem das Hybridfahrzeug (1) nur mit einer Antriebskraft der Maschine (2) angetrieben wird;
einen EV-Antriebsmodus, in dem das Hybridfahrzeug (1) nur mit einer Antriebskraft des Motors (3) angetrieben wird; und
einen HEV-Antriebsmodus, in dem das Hybridfahrzeug (1) mit der Antriebskraft der Maschine (2) und der Antriebskraft des Motors (3) angetrieben wird,
wobei die Antriebssteuervorrichtung eine ACC-Funktion aufweist, die ein Fahren mit konstanter Geschwindigkeit in Übereinstimmung mit einer Zielfahrzeuggeschwindigkeit durchführt, wenn ein anderes Fahrzeug davor nicht in der Fahrzeugfahrspur vorliegt, und ein folgendes Fahren unter Aufrechterhaltung einer vorbestimmten Zwischenfahrzeugzeit durchführt, wenn das Fahrzeug davor vorliegt;
wobei die Antriebssteuervorrichtung (10) konfiguriert ist, um
in einem Fall, in dem das Fahrzeug davor, dem durch die ACC-Funktion gefolgt wird, beschleunigt,
eine Beschleunigungssteuerung gemäß einem ersten Drehmomentbedarf (T1), bestimmt durch eine Beschleunigungsrate des Fahrzeugs davor in dem Maschinenantriebsmodus oder dem HEV-Antriebsmodus, auszuführen, und
eine Beschleunigungssteuerung gemäß einem zweiten Drehmomentbedarf (T2), bestimmt durch die Beschleunigungsrate des Fahrzeugs davor in dem EV-Antriebsmodus, auszuführen, und
der zweite Drehmomentbedarf (T2) mit einem größeren Anstieg als der erste Drehmomentbedarf (T1) zunimmt.

2. Die Antriebssteuervorrichtung (10) für das Hybridfahrzeug (1) nach Anspruch 1, wobei das Steuersystem angepasst ist, um eine Steuerung zum Schalten in den EV-Antriebsmodus auszuführen, wenn ein tatsächliches Drehmoment kleiner wird als ein vorbestimmter Schwellenwert (a0), und Schalten in den HEV-Antriebsmodus, wenn das tatsächliche Drehmoment gleich oder größer wird als der vorbestimmte Schwellenwert (a0) während eines Antreibens in dem EV-Antriebsmodus .

3. Die Antriebssteuervorrichtung (10) für das Hybridfahrzeug (1) nach Anspruch 1, wobei die Beschleunigungssteuerung gemäß dem zweiten Drehmomentbedarf (T2) in einem Fall ausgeführt wird, in dem das Fahrzeug davor, dem durch die ACC-Funktion gefolgt wird, startet, während das Fahrzeug (1) in dem EV-Antriebsmodus aufgrund eines Stopps des Fahrzeugs davor stoppt.

4. Die Antriebssteuervorrichtung (10) für das Hybridfahrzeug (1) nach einem der Ansprüche 1 bis 3, wobei die Beschleunigungssteuerung in dem EV-Antriebsmodus gemäß dem zweiten Drehmomentbedarf (T2) ausgeführt wird, wenn die Zielzwischenfahrzeugzeit in der ACC-Funktion gleich oder kleiner ist als ein vorbestimmter Wert in einem eingestellten Bereich davon.

## Revendications

1. Appareil de commande d'entraînement (10) pour un véhicule hybride (1) doté d'un moteur (2) et d'un moteur électrique (3) dans un système d'entraînement, et doté d'un système de commande pour commander la force de freinage/d'entraînement du moteur (2) et du moteur électrique (3), et adapté pour réaliser sélectivement :
un mode d'entraînement de moteur dans lequel le véhicule hybride (1) est entraîné uniquement par la force d'entraînement du moteur (2) ;
un mode d'entraînement EV dans lequel le véhicule hybride (1) est entraîné uniquement par la force d'entraînement du moteur électrique (3) ; et
un mode d'entraînement HEV dans lequel le véhicule hybride (1) est entraîné par la force d'entraînement du moteur (2) et la force motrice du moteur électrique (3), l'appareil de commande d'entraînement ayant une fonction ACC qui réalise une circulation à vitesse constante en fonction d'une vitesse de véhicule cible lorsqu'un autre véhicule qui précède n'est pas présent dans la voie de circulation du véhicule et réalise une circulation de suivi en conservant un temps intervéhicules prédéterminé lorsque le véhicule qui précède est présent ;
dans lequel l'appareil de commande d'entraînement (10) est configuré,
dans le cas où le véhicule qui précède suivi par la fonction ACC, accélère,
pour exécuter une commande d'accélération selon une première demande de couple (T1) déterminée par un taux d'accélération du véhicule qui précède dans le mode d'entraînement de moteur ou le mode d'entraînement HEV, et
pour exécuter une commande d'accélération selon une deuxième demande de couple (T2) déterminée par le taux d'accélération du véhicule qui précède dans le mode d'entraînement EV, et
la deuxième demande de couple (T2) augmente avec une inclinaison supérieure à la première demande de couple (T1).

2. Appareil de commande d'entraînement (10) pour le véhicule hybride (1) selon la revendication 1, dans lequel le système de commande est adapté pour exécuter une commande de passage au mode d'entraînement EV lorsqu'un couple réel devient inférieur à une valeur seuil prédéterminée (a0), et de passage au mode d'entraînement HEV lorsque le couple réel devient égal ou supérieur à la valeur seuil prédéterminée (a0) pendant l'entraînement dans le mode d'entraînement EV.

3. Appareil de commande d'entraînement (10) pour le véhicule hybride (1) selon la revendication 1, dans lequel la commande d'accélération selon la deuxième demande de couple (T2) est exécutée dans le cas où le véhicule qui précède étant suivi par la fonction ACC démarre pendant que le véhicule (1) s'arrête en mode d'entraînement EV en raison de l'arrêt du véhicule qui précède.

4. Appareil de commande d'entraînement (10) pour le véhicule hybride (1) selon l'une quelconque des revendications 1 à 3, dans lequel la commande d'accélération dans le mode d'entraînement EV selon la deuxième demande de couple (T2) est exécutée lorsque le temps intervéhicules dans la fonction ACC est inférieur ou égal à une valeur prédéterminée dans une plage définie de celle-ci.
